# EUROPÄISCHE PATENTSCHRIFT

(11) **EP 2 810 769 B1**
(45) Veröffentlichungstag und Bekanntmachung des Hinweises auf die Patenterteilung: **12.07.2023**
(21) Anmeldenummer: 14162763.8
(22) Anmeldetag: 31.03.2014
(51) Int. Cl.: F16L 11/04, B32B 1/08, B32B 15/08, B29C 53/60, B32B 15/085, B32B 27/08, B32B 27/34, B32B 27/32

(54) **Schutzmantelrohr mit Diffusionssperre**
Protective pipe jacket with a diffusion barrier
Tube à enveloppe protectrice avec barrière de diffusion

(30) Priorität: 05.06.2013 DE 102013105813
(43) Veröffentlichungstag der Anmeldung: 10.12.2014
(73) Patentinhaber: Gerodur MPM Kunststoffverarbeitung GmbH & Co. KG, 01844 Neustadt in Sachsen (DE)
(72) Erfinder: MENZL, Andreas, 9402 Moerschwil (CH)
(74) Vertreter: Lippert Stachow Patentanwälte Rechtsanwälte Partnerschaft mbB

(56) Entgegenhaltungen:
- EP-A1- 1 162 061
- EP-A2- 0 428 833
- EP-A2- 0 617 219
- WO-A1-2004/094887
- DE-T5-112007 000 275
- DE-U1-202007 008 875
- DE-U1-202014 100 497
- DATABASE WPI Week 201378 Thomson Scientific, London, GB; AN 2013-G69775 XP002732923, -& CN 102 825 875 A (ESSEL PACKAGING GUANGZHOU CO LTD) 19. Dezember 2012 (2012-12-19)

## Beschreibung

Die Erfindung betrifft ein Schutzmantelrohr mit einer Diffusionssperre und einem Kernrohr aus einem Kunststoff, sowie einem aufextrudierten Schutzmantel.

Es ist bekannt, dass Kunststoffrohre, beispielsweise aus Polyethylen oder anderen Kunststoffen ohne besondere Schutzmaßnahmen keine ausreichende Diffusions- bzw. Permeationsdichtigkeit in Bezug auf unerwünschte Stoffe aufweisen, die dadurch in das im Kunststoffrohr transportierte Medium oder aus diesem Medium heraus in die Umgebung gelangen könnten.

Um diese ungünstige Eigenschaft auszugleichen, werden bei derartigen Kunststoffrohren Diffusionssperren in Form von mindestens einer zusätzlichen Materiallage eingesetzt, die das Kernrohr vollständig umgibt.

Als besonders geeignetes Material für eine Diffusionssperre hat sich Aluminiumfolie erwiesen. Die Aluminiumfolie wird dazu schraubenlinienförmig sich etwas überlappend um das Kernrohr gewickelt. Auf diese Weise wird eine dichte Diffusionssperre über die gesamte Rohrlänge erreicht, die auch dann dicht bleibt, wenn das Kunststoffrohr im zulässigen Bereich gebogen oder zum Transport auf eine Haspel gewickelt wird.

Nachteilig ist bei einer derartigen Diffusionssperre der vergleichsweise hohe Verbrauch an Aluminiumfolie, die zudem zur sicheren Handhabung eine Mindestdicke besitzen muss, die gewöhnlich um etwa 100 um oder auch darüber liegt. Auch muss bei der Handhabung von mit einer solchen Diffusionssperre versehenen Kunststoffrohren darauf geachtet werden, dass die Biegeradien hinreichend groß gewählt werden, um eine Überschreitung der Zugfestigkeit und damit eine Beschädigung der Diffusionssperre zu vermeiden.

Alternativ kann die Aluminiumfolie auch längs um das Rohr auf Stoß gelegt werden, oder derart, dass eine durchgehende, sich überlappende Längsnaht entsteht.

Anstelle von Aluminiumfolie sind auch geeignete extrudierte Kunststoffschichten als Diffusionssperren bekannt geworden.

So wird in der DE 41 32 984 C1 ein Kunststoffrohr aus einem Kernrohr mit einem darauf angeordneten Schutzmantel aus PVDF (Polyvinylidenfluorid) beschrieben, wobei das Kernrohr und der Schutzmantel durch Coextrudieren hergestellt werden. Der Schutzmantel aus PVDF besitzt eine hohe Diffusionsdichtigkeit gegenüber Gasen und Flüssigkeiten. Das Kernrohr besteht aus Polyethylen, was den Vorteil einer hohen Spannungsrissbeständigkeit besitzt und das beständig gegenüber aggressiven Medien und Böden ist, sowie unempfindlich gegen Frost und Mikroorganismen ist.

Der PVDF-Schutzmantel, der eine Dicke von 300 um bis 500 um aufweist, kann zusätzlich mit einem Schutzmantel aus Polyethylen umgeben werden, der einen verbesserten mechanischen Schutz gegen Beschädigungen bietet. Schließlich kann ergänzend zum PVDF-Schutzmantel eine Schutzschicht aus Aluminium vorgesehen sein.

Weiterhin geht aus der WO 2004/094887 A1 ein Kunststoff/Metall-Verbundrohr, insbesondere ein Verbundrohr mit Aluminiummantel zur Verwendung als ein für Sauerstoff undurchlässiges Heizungsrohr hervor. Auf einem Kunststoff-Basisrohr befindet sich eine Sauerstoffdiffusionssperre (z.B. aus EVOH), darüber befinden sich eine Haftvermittlerschicht und ein darüber gelegtes, nicht überlappendes Metallband als Festigkeitsträger. Über dem Metallband kann mittels einer weiteren Haftschicht ein Außenmantel aufgebracht sein, wobei sich zwischen sämtlichen Schichten Haftvermittlerschichten befinden.

Dem hier verwendeten Metallband kommt keine Diffusionsschicht-Sperrfunktion zu.

In der DE 20 2007 008875 U1 wird eine mehrschichtige Fluidleitung für Heizzwecke mit einer Grundschicht sowie eine diese umgebende Diffusionssperrschicht beschrieben, die mindestens eine Kupferschicht mit einer Dicke von 10 - 50 µm und eine Grundschicht aus einem vernetzten Polyethylen, Polyethylen 100 oder Polybuten enthält.

Zwischen sämtlichen Schichten befinden sich Haftvermittlerschichten.

In DATABASE WPI, Week 201378, Thomson Scientific, London, GB; AN 2013-G69775 XP002732923, -& CN 102 825 875 A, wird ein Mehrschichtbarriere-Film beschrieben, der eine erste Barriereschicht aus EVOH (als Sauerstoffsperre), eine zweite kristalline und/oder nichtkristalline Polyamidschicht und eine dritte Schicht aus EVOH oder Polyamid enthält.

Die inneren und die äußeren Filme sind mehrschichtig und sind Polyethylen basierte Schichten, zwischen denen sich ein Haftvermittler befindet, der aus einem polymerisierten Anhydrid-Polymer, einem transparenten LD PE oder einem linearen LD PE besteht. Die einzelnen Schichten werden einzeln hergestellt und bei 20 - 30 °C über 8 - 72 Stunden gehärtet. Diese Mehrschichtfolie ist als äußere Schicht von biegsamen Rohren geeignet.

In der EP 0 617 219 A2 wird die Verwendung von Sperrschicht-Kunststoffen als Festigkeitsträger in Kfz-Rohrleitungen in Form von Laminatverbund-Gesamtheiten beschrieben. Als Sperrschicht-Kunststoffe kommen in Betracht: EVOH, PE, PP, PMP, POM, PBT, PVDF, FEP, ETFE, ECTFE, TFA oder kompatible Mischungen. Die Laminatverbund-Gesamtheiten werden durch Haftvermittlerfilme geschaffen.

Die EP 1 162 061 A1 bezieht sich auf thermoplastische Mehrschichtverbunde für eine Mehrschicht-Kraftstoffleitung in Form eines Mehrschichtschlauches oder -rohres mit Barrierewirkung unter Verwendung von Haftvermittlern. Für die Mehrschichtverbunde sind Polyamide besonders geeignet.

In der EP 0 428 833 A2 wird eine durch Koextrusion hergestellte Kraftfahrzeug-Rohrleitung aus Polyamiden beschrieben. Die Rohrleitung besteht aus einer Außenschicht aus Polyamid, einer Zwischenschicht aus einem Copolymer aus Äthylen oder Vinylalkohol und einer Innenschicht aus Polyamid, wobei der Zwischenschicht eine Haftvermittlerschicht zwischengeschaltet ist.

Die CN102825875 A befasst sich mit einem Mehrschichtfilm aus einem äußeren Film, einem Mehrschicht-Barrierefilm und einem inneren Film die für Verpackungsmittel und weiche Verbundschläuche geeignet ist. Die einzelnen Schichten des Mehrschicht-Barrierefilms bestehen aus Ethylen-Vinylalkohol (EVOH) als erste Schicht, kristallinem oder nicht kristallinem Polyamid (bevorzugt Nylon) als zweite Schicht und EVOH oder Polyamid als dritte Schicht. Der äußere und der innere Mehrschichtfilm, sowie die Barrierefilme werden unabhängig voneinander hergestellt und bei niedriger Temperatur nachbehandelt. Ein Bezug zu Schutzmantelrohren ist nicht gegeben.

Weiterhin werden in der DE 11 2007 000 275 T5 ein bandumhülltes Mehrschichtrohr und ein Verfahren zu dessen Herstellung beschrieben, das im Wesentlichen hermetisch abgeschlossen ist. Das Mehrschichtrohr besteht aus einem Innenrohr, einer Diffusionssperre (Mehrschicht-Bandlaminat mit Diffusionssperrschichtmaterial), thermoplastischen Folienschichten und einer Klebeschicht zwischen der Diffusionssperre und einer thermoelastischen Folienschicht. Als Innenrohr kommt auch ein Silikonrohr in Betracht, damit dieses innerhalb des Diffusionssperrenbandlaminates gleiten kann.

Der Erfindung liegt nunmehr die Aufgabe zugrunde, ein Schutzmantelrohr mit einer Diffusionssperre gegen unerwünschte Stoffe und einem Kernrohr aus einem Kunststoff zu schaffen, das bei guter Diffusionsdichtigkeit besonders kostengünstig hergestellt werden kann und wobei mit der Diffusionssperre eine hohe Variabilität in Bezug auf die Haftung am Kernrohr bzw. am Schutzmantel, oder auch zu weiteren das Kernrohr umgebenden Schichten gewährleistet wird.

Die der Erfindung zugrunde liegende Aufgabe wird bei einem Schutzmantelrohr mit einer Diffusionssperre und einem Kernrohr aus einem Kunststoff, wie Polyethylen, Polypropylen oder ähnlichen Kunststoffen, nämlich Polybuten, Polyamid, oder auch vernetzten oder RC-Werkstoffen, oder gefüllten Kunststoffen, sowie einem auf die Diffusionssperre aufextrudierten Schutzmantel aus Polyethylene, Polypropylen oder ähnlichen Kunststoffen, wie Polybutylen, Polyamid, oder auch vernetzten oder RC-Werkstoffen,
dadurch gelöst, dass
die Diffusionssperre zwischen dem Kernrohr und dem Schutzmantel als Mehrschichtverbundfolie ausgebildet ist,
die mindestens eine Metallfolienlage und/oder mindestens eine Kunststofffolie mit diffusionshindernden Eigenschaften aufweist, die zwischen unterschiedlichen Kunststoffschichten mit folgender Schichtenfolge en angeordnet ist:
   einer Schicht aus Polyethylen oder Polypropylen und
   Schichten aus Polypropylen, Polypropylen-Copolymer oder Polyamid, oder Polyamid und Polypropylen-Copolymer, oder Polypropylen,
   wobei die einzelnen Schichten der Mehrschichtverbundfolie mit einem Haftvermittler kaschiert sind.

Die Verwendung einer derartigen Mehrschichtverbundfolie hat den Vorteil, dass die einzelnen Kunststoffschichten und die Metallfolienlage bzw. die Kunststofffolie besonders dünn gehalten werden können, so dass die Mehrschichtverbundfolie mit geringem Materialeinsatz kostengünstig hergestellt werden kann.

Mit den nachfolgend beschriebenen Varianten der Erfindung lassen sich je nach Orientierung der Mehrschichtverbundfolie unterschiedliche Haftungseigenschaften zum Kernrohr bzw. zum Schutzmantel erreichen.

In einer ersten Variante der Erfindung weist die Mehrschichtverbundfolie eine Schichtenfolge aus einer Kunststoffschicht aus Polyethylen, der Metallfolienlage und/oder der Kunststofffolie und einer Kunststoffschicht aus einem Polypropylen-Copolymer auf.

Durch den unterschiedlichen Folienaufbau, d.h. der Schichtfolge der Mehrschichtverbundfolie, lässt sich deren Haftung zum Kernrohr, dem Schutzmantel oder anderen Schichten des Kunststoffrohres steuern.

Diese Eigenschaften der Mehrschichtverbundfolie können auch bei den nachfolgend beschriebenen Varianten der Erfindung entsprechend genutzt werden.

In einer zweiten Variante der Erfindung weist die Mehrschichtverbundfolie eine Schichtenfolge aus einer Schicht aus Polyethylen, der Metallfolienlage und/oder der Kunststofffolie und einer Schicht aus Polypropylen auf.

In einer dritten Variante der Erfindung weist die Mehrschichtverbundfolie eine Schichtenfolge aus einer Schicht aus Polyethylen, der Metallfolienlage und/oder der Kunststofffolie, einer Polyamidschicht und einer Polypropylenschicht auf.

In einer vierten Variante der Erfindung weist die Mehrschichtverbundfolie eine Schichtenfolge aus einer Schicht aus Polyethylen, der Metallfolienlage und/oder der Kunststofffolie, einer Polyamidschicht und einer Polypropylen-Copolymer-Schicht auf.

In einer fünften Variante der Erfindung weist die Mehrschichtverbundfolie eine Schichtenfolge aus einer Schicht aus Polypropylen, der Metallfolienlage und/oder der Kunststofffolie, einer Polyamidschicht und einer weiteren Schicht aus Polypropylen auf.

In einer sechsten Variante der Erfindung weist die Mehrschichtverbundfolie eine Schichtenfolge aus einer Polypropylenschicht, der Metallfolienlage und/oder der Kunststofffolie und einer Polyamidschicht auf.

Die bei der dritten bis sechsten Variante der Erfindung vorgesehene Polyamidschicht dient als zusätzliche Diffusionssperre und zur Erhöhung der Festigkeit der Mehrschichtverbundfolie.

In einer besonderen Ausgestaltung der Erfindung ist die Mehrschichtverbundfolie schraubenlinienförmig sich an den spiralig längs verlaufenden Stoßkanten überlappend, oder auf Stoß, um das Kernrohr gewickelt, wobei die sich überlappenden und spiralig längs verlaufenden Stoßkanten, oder die auf Stoß liegenden Stoßkanten zusätzlich miteinander verschweißt oder verklebt sein können.

In einer weiteren besonderen Ausgestaltung der Erfindung ist die Mehrschichtverbundfolie längs um das Kernrohr gelegt ist, derart dass an der Stoßstelle freie Folienbahnen hervorstehen, deren aufeinander liegenden Unterseiten zu einer Foliennaht miteinander verschweißt oder verklebt sind.

Um eine besonders gute Abdichtung zu erreichen, ist die Foliennaht zu einer Art Labyrinthdichtung ein oder mehrfach gefalzt bzw. umgeschlagen.

Die Erfindung wird nachfolgend an Ausführungsbeispielen näher erläutert.

Das erfindungsgemäße Schutzmantelrohr besteht aus einem Kernrohr aus einem Kunststoff, wie Polyethylen (PE), wie PE-100, PE-125, Polypropylen (PP) oder ähnlichen Kunststoffen, Polybuten (PB), Polyamid (PA), oder auch vernetzten oder RC-Werkstoffen, bzw. auch aus gefüllten Kunststoffen.

Der Schutzmantel kann ebenfalls aus einem Kunststoff, wie Polyethylen (PE), wie PE-100, PE-125, Polypropylen (PP) oder ähnliche Kunststoffe, Polybuten (PB), Polyamid (PA), oder auch vernetzten oder RC-Werkstoffen, bestehen.

Das Kernrohr und der Schutzmantel können aus den gleichen, oder aus unterschiedlichen Kunststoffen bestehen. Weiterhin befindet sich zwischen dem Kernrohr und dem Schutzmantel eine Diffusionssperre.

Für die Diffusionssperre wird eine Mehrschichtverbundfolie eingesetzt, bei der mindestens eine Metallfolienlage zwischen unterschiedlichen Kunststoffschichten eingebettet ist. Als Metallfolienlage kommt bevorzugt Aluminiumfolie in Betracht, wobei jedoch auch andere geeignete Metalle Verwendung finden können, um eine Diffusionssperre gegen besondere Materialien zu realisieren.

Anstelle der Metallfolienlage als Diffusionssperre kann auch eine Kunststofffolie aus einem speziellen Kunststoff mit diffusionshindernden Eigenschaften, wie PVDF (Polyvinylidenfluorid) oder EVOH (Ethylen-Vinylalkohol-Copolymer), einem Polyamid, einem anderen geeigneten Kunststoff, oder auch Kombinationen aus der Metallfolienlage und den Kunststofffolien, eingesetzt werden.

Die Verwendung einer solchen Mehrschichtverbundfolie hat den Vorteil, dass die einzelnen Kunststoffschichten und die Metallfolienlage bzw. die Kunststofffolie besonders dünn gehalten werden können. Das hat den weiteren Vorteil, dass das Schutzmantelrohr durch die Diffusionssperre nicht unnötig versteift wird, wodurch geringere Biegeradien erlaubt werden, ohne dass die Gefahr besteht, dass die Mehrschichtverbundfolie reißt. Auch wird der Nenndurchmesser des erfindungsgemäßen Schutzmantelrohres durch die Mehrschichtverbundfolie nur unwesentlich beeinflusst.

Die einzelnen Schichten der Mehrschichtverbundfolie bestehen aus Polyethylen, Polypropylen, Polypropylen-Copolymer, Polyamid oder anderen geeigneten thermoplastischen Kunststoffen und der Metallfolienlage und/oder der Kunststofffolie in unterschiedlicher Schichtenfolge. Die einzelnen Schichten sind miteinander verbunden, beispielsweise durch Haftvermittler.

Das für die Mehrschichtverbundfolie eingesetzte Polypropylen kann beispielsweise ein isotaktisches Polypropylen der Klassen Polypropylen-Homopolymer (PP-H), ein Polypropylen-Randomcopolymerisat (PP-R), oder auch ein Polypropylen-Copolymer sein.

Je nach der Anordnung der Mehrschichtverbundfolie, d. h. der Reihenfolge der Schichten, lassen sich unterschiedliche Haftungseigenschaften zum Kernrohr bzw. zum Schutzmantel, oder auch zu anderen Schichten des Kunststoffrohres, erreichen.

Nachfolgend werden unterschiedliche Varianten der Mehrschichtverbundfolie beschrieben.

In einer ersten Variante weist die Mehrschichtverbundfolie eine Schichtenfolge aus einer Kunststoffschicht aus Polyethylen, der Metallfolienlage und/oder der Kunststofffolie und einer Kunststoffschicht aus einem Polypropylen-Copolymer auf.

Damit lassen sich je nach Orientierung der Mehrschichtverbundfolie unterschiedliche Haftungseigenschaften zum Kernrohr bzw. zum Schutzmantel erreichen.

Diese besonderen Eigenschaften der Mehrschichtverbundfolie können auch bei den nachfolgend beschriebenen Varianten der Erfindung entsprechend genutzt werden.

In einer zweiten Variante besitzt die Mehrschichtverbundfolie eine Schichtenfolge aus Polethylen, der Metallfolienlage und/oder der Kunststofffolie und einer Schicht aus Polypropylen.

In einer dritten Variante besitzt die Mehrschichtverbundfolie eine Schichtenfolge aus Polyethylen, der Metallfolienlage und/oder der Kunststofffolie, einer Polyamidschicht und einer Polypropylenschicht.

In einer vierten Variante besitzt die Mehrschichtverbundfolie eine Schichtenfolge aus Polyethylen, der Metallfolienlage und/oder der Kunststofffolie, einer Polyamidschicht und einer Polypropylen-Copolymerschicht.

In einer fünften Variante besitzt die Mehrschichtverbundfolie eine Schichtenfolge aus Polypropylen, der Metallfolienlage und/oder der Kunststofffolie, einer Polyamidschicht und einer Schicht aus Polypropylen.

In einer sechsten Variante besitzt die Mehrschichtverbundfolie eine Schichtenfolge aus einem Polypropylen, der Metallfolienlage und/oder der Kunststofffolie, einer Polyamidschicht und einer Polypropylenschicht.

In einer siebenten Variante besitzt die Mehrschichtverbundfolie eine Schichtenfolge aus einer Polypropylenschicht, der Metallfolienlage und/oder der Kunststofffolie und einer Polyamidschicht.

Die bei der dritten bis siebenten Variante vorgesehene Polyamidschicht dient als zusätzliche Diffusionssperre.

Die Mehrschichtverbundfolie kann schraubenlinienförmig und sich an den Stoßkanten überlappend um das Kernrohr gewickelt werden, wobei die sich überlappenden und spiralig längs verlaufenden Stoßkanten entweder nur aufeinander gelegt sind, oder miteinander verschweißt oder verklebt werden, um eine gute Dichtigkeit zu erreichen. Alternativ kann die Mehrschichtverbundfolie auch schraubenlinienförmig um das Kernrohr gewickelt werden, wobei die spiralig verlaufenden Stoßkanten auf Stoß liegen und miteinander verschweißt oder verklebt werden.

Die Mehrschichtverbundfolie kann auch längs um das Kernrohr gelegt werden, derart, dass diese sich an der Stoßstelle überlappt.

Alternativ kann die Mehrschichtverbundfolie auch so längs um das Kernrohr gelegt werden, dass an der Stoßstelle freie Folienbahnen hervorstehen. Die freien Folienbahnen sind entweder einfach übereinander gelegt, oder mit deren aufeinander liegenden Unterseiten zu einer Foliennaht miteinander verschweißt oder verklebt.

Diese Foliennaht kann an die Außenseite der Mehrschichtverbundfolie angelegt werden, oder um eine besonders gute Abdichtung zu erreichen, zu einer Art Labyrinthdichtung ein- oder mehrfach gefalzt bzw. umgeschlagen werden.

Es versteht sich, dass die Mehrschichtverbundfolie auch in einer anderen Schichtenfolge entsprechend dem jeweiligen Einsatzzweck aufgebaut werden kann.

## Patentansprüche

1. Schutzmantelrohr mit einer Diffusionssperre und einem Kernrohr aus einem Kunststoff, wie Polyethylen, Polypropylen oder ähnlichen Kunststoffen, nämlich Polybuten, Polyamid, oder auch vernetzten oder RC-Werkstoffen, oder gefüllten Kunststoffen, sowie einem auf die Diffusionssperre aufextrudierten Schutzmantel aus Polyethylene, Polypropylen oder ähnlichen Kunststoffen, wie Polybutylen, Polyamid, oder vernetzten oder RC-Werkstoffen, wobei die Diffusionssperre zwischen dem Kernrohr und dem Schutzmantel als Mehrschichtverbundfolie ausgebildet ist, die mindestens eine Metallfolienlage und/oder mindestens eine Kunststofffolie mit diffusionshindernden Eigenschaften aufweist, die zwischen unterschiedlichen Kunststoffschichten angeordnet ist, nämlich:
einer Schicht aus Polyethylen oder Polypropylen und
Schichten aus Polypropylen, Polypropylen-Copolymer oder Polyamid, oder Polyamid und Polypropylen-Copolymer, oder Polypropylen,
wobei die einzelnen Schichten der Mehrschichtverbundfolie mit einem Haftvermittler kaschiert sind.

2. Schutzmantelrohr nach Anspruch 1, **dadurch gekennzeichnet, dass** die Mehrschichtverbundfolie eine Schichtenfolge aus einer Kunststoffschicht aus Polyethylen, der Metallfolienlage und/oder der Kunststofffolie und einer Kunststoffschicht aus Polypropylen-Copolymer aufweist.

3. Schutzmantelrohr nach Anspruch 1, **dadurch gekennzeichnet, dass** die Mehrschichtverbundfolie eine Schichtenfolge aus Polethylen, der Metallfolienlage und/oder der Kunststofffolie und einer Schicht aus Polypropylen aufweist.

4. Schutzmantelrohr nach Anspruch 1, **dadurch gekennzeichnet, dass** die Mehrschichtverbundfolie eine Schichtenfolge aus Polyethylen, der Metallfolienlage und/oder der Kunststofffolie, einer Polyamidschicht und einer Polypropylenschicht aufweist.

5. Schutzmantelrohr nach Anspruch 1, **dadurch gekennzeichnet, dass** die Mehrschichtverbundfolie eine Schichtenfolge aus Polyethylen, der Metallfolienlage und/oder der Kunststofffolie, einer Polyamidschicht und einer Polypropylen-Copolymer-Schicht aufweist.

6. Schutzmantelrohr nach Anspruch 1, **dadurch gekennzeichnet, dass** die Mehrschichtverbundfolie eine Schichtenfolge aus Polypropylen, Metallfolienlage und/oder der Kunststofffolie, einer Polyamidschicht und einer Schicht aus einem Polypropylen aufweist.

7. Schutzmantelrohr nach Anspruch 1, **dadurch gekennzeichnet, dass** die Mehrschichtverbundfolie eine Schichtenfolge aus einer Polypropylenschicht, Metallfolienlage und/oder der Kunststofffolie und einer Polyamidschicht aufweist.

8. Schutzmantelrohr nach einem der vorhergehenden Ansprüche, **dadurch gekennzeichnet, dass** das Polypropylen ein isotaktisches Polypropylen der Klassen Polypropylen-Homopolymer, oder ein Polypropylen-Randomcyclopolymerisat ist.

9. Schutzmantelrohr nach einem der Ansprüche 1 bis 8, **dadurch gekennzeichnet, dass** die Mehrschichtverbundfolie spiralförmig und sich an den spiralig längs verlaufenden Stoßkanten überlappend, oder auf Stoß um das Kernrohr gewickelt ist.

10. Schutzmantelrohr nach Anspruch 9, **dadurch gekennzeichnet, dass** die sich überlappenden und spiralig längs verlaufenden oder auf Stoß liegenden Stoßkanten miteinander verschweißt oder verklebt sind.

11. Schutzmantelrohr nach einem der Ansprüche 1 bis 8, **dadurch gekennzeichnet, dass** die Mehrschichtverbundfolie längs um das Kernrohr gelegt ist, wobei sich die längs des Kernrohres verlaufenden Stoßkanten sich überlappen, oder auf Stoß liegen.

12. Schutzmantelrohr nach Anspruch 11, **dadurch gekennzeichnet, dass** die sich einander überlappenden oder auf Stoß liegenden Stoßkanten miteinander verschweißt oder verklebt sind.

13. Schutzmantelrohr nach einem der Ansprüche 1 bis 8, **dadurch gekennzeichnet, dass** die Mehrschichtverbundfolie längs um das Kernrohr gelegt ist, derart, dass an der Stoßstelle freie Folienbahnen hervorstehen, deren aufeinander liegenden Unterseiten zu einer Foliennaht übereinander gelegt, oder miteinander verschweißt oder verklebt sind und/oder dass die Foliennaht zu einer Labyrinthdichtung ein oder mehrfach gefalzt oder umgeschlagen ist.

## Claims

1. Protective casing pipe having a diffusion barrier and a core pipe made of a plastic, such as polyethylene, polypropylene or similar plastics, namely polybutene, polyamide, or else crosslinked or RC materials, or filled plastics, and also having a protective casing extruded onto the diffusion barrier and made of polyethylene, polypropylene or similar plastics, such as polybutylene, polyamide, or else crosslinked or RC materials,
where the diffusion barrier between the core pipe and the protective casing is configured as a multi-layer composite film which has at least one metal foil ply and/or at least one plastics film having diffusionhindering properties, which is disposed between different plastics layers, namely:
a layer of polyethylene or polypropylene and layers of polypropylene, polypropylene copolymer or polyamide, or polyamide and polypropylene copolymer, or polypropylene, wherein the individual layers of the multi-layer composite film are laminated with an adhesion promoter.

2. Protective casing pipe according to Claim 1, **characterized in that** the multi-layer composite film has a layer sequence composed of a plastics layer made of polyethylene, the metal foil ply and/or the plastics film, and a plastics layer made of polypropylene copolymer.

3. Protective casing pipe according to Claim 1, **characterized in that** the multi-layer composite film has a layer sequence composed of polyethylene, the metal foil ply and/or the plastics film, and a layer of polypropylene.

4. Protective casing pipe according to Claim 1, **characterized in that** the multi-layer composite film has a layer sequence composed of polyethylene, the metal foil ply and/or the plastics film, a polyamide layer, and a polypropylene layer.

5. Protective casing pipe according to Claim 1, **characterized in that** the multi-layer composite film has a layer sequence composed of polyethylene, the metal foil ply and/or the plastics film, a polyamide layer, and a polypropylene copolymer layer.

6. Protective casing pipe according to Claim 1, **characterized in that** the multi-layer composite film has a layer sequence composed of polypropylene, metal foil ply and/or the plastics film, a polyamide layer, and a layer of a polypropylene.

7. Protective casing pipe according to Claim 1, **characterized in that** the multi-layer composite film has a layer sequence composed of a polypropylene layer, metal foil ply and/or the plastics film, and a polyamide layer.

8. Protective casing pipe according to any of the preceding claims, **characterized in that** the polypropylene is an isotactic polypropylene of the classes polypropylene homopolymer, a random polypropylene cyclopolymer or a polypropylene copolymer.

9. Protective casing pipe according to any of Claims 1 to 8, **characterized in that** the multi-layer composite film is wound around the core pipe in spiral form with overlapping at the abutting edges extending lengthwise spirally, or in abutment.

10. Protective casing pipe according to Claim 9, **characterized in that** the abutting edges which are overlapping and extend lengthwise spirally or are in abutment are welded or adhesively bonded to one another.

11. Protective casing pipe according to any of Claims 1 to 8, **characterized in that** the multi-layer composite film is placed lengthwise around the core pipe, with the abutting edges extending along the core pipe overlapping, or being in abutment.

12. Protective casing pipe according to Claim 11, **characterized in that** the abutting edges which are mutually overlapping or are in abutment are welded or adhesively bonded to one another.

13. Protective casing pipe according to any of Claims 1 to 8, **characterized in that** the multi-layer composite film is placed lengthwise around the core pipe, in such a way that at the abutment point free film webs project, whose undersides lying against one another are placed one over another to form a film seam, or are welded or adhesively bonded to one another, and/or that the film seam is turned over or folded one or more times to form a labyrinth seal.

## Revendications

1. Tube à enveloppe protectrice comportant une barrière de diffusion et un tube central composé d'une matière plastique, comme du polyéthylène, du polypropylène ou de matières plastiques similaires, à savoir du polybutène, du polyamide ou également des matières plastiques réticulées ou des matières plastiques RC, ou des matières plastiques remplies, ainsi qu'une enveloppe protectrice, extrudée sur la barrière de diffusion et composée de polyéthylène, de polypropylène ou de matières plastiques similaires, comme du polybutylène, du polyamide, ou également des matières plastiques réticulées ou des matières plastiques RC,
la barrière de diffusion étant formée, entre le tube central et l'enveloppe protectrice, en tant que feuille composite multicouche, qui présente au moins une couche de feuille métallique et/ou au moins une feuille de matière plastique dotée de propriétés d'inhibition de la diffusion, qui est disposée entre différentes couches de matières plastiques, à savoir :
une couche de polyéthylène ou de polypropylène et des couches de polypropylène, d'un copolymère de polypropylène, ou de polyamide, ou d'un copolymère de polyamide et de polypropylène, ou de polypropylène,
les couches individuelles de la feuille composite multicouche étant contrecollées avec un agent favorisant l'adhérence.

2. Tube à enveloppe protectrice selon la revendication 1, **caractérisé en ce que** la feuille composite multicouche présente une série de couches composée d'une couche de matière plastique de polyéthylène, de la couche de feuille métallique et/ou de la feuille de matière plastique et d'une couche de matière plastique composée d'un copolymère de polypropylène.

3. Tube à enveloppe protectrice selon la revendication 1, **caractérisé en ce que** la feuille composite multicouche présente une série de couches composée d'un polyéthylène, de la couche de feuille métallique et/ou de la feuille de matière plastique et d'une couche de polypropylène.

4. Tube à enveloppe protectrice selon la revendication 1, **caractérisé en ce que** la feuille composite multicouche présente une série de couches composée d'un polyéthylène, de la couche de feuille métallique et/ou de la feuille de matière plastique, d'une couche de polyamide et d'une couche de polypropylène.

5. Tube à enveloppe protectrice selon la revendication 1, **caractérisé en ce que** la feuille composite multicouche présente une série de couches composée d'un polyéthylène, de la couche de feuille métallique et/ou de la feuille de matière plastique, d'une couche de polyamide et d'une couche de copolymère de polypropylène.

6. Tube à enveloppe protectrice selon la revendication 1, **caractérisé en ce que** la feuille composite multicouche présente une série de couches composée d'un polypropylène, d'une couche de feuille métallique et/ou de la feuille de matière plastique, d'une couche de polyamide et d'une couche d'un polypropylène.

7. Tube à enveloppe protectrice selon la revendication 1, **caractérisé en ce que** la feuille composite multicouche présente une série de couches composée d'une couche de polypropylène, d'une couche de feuille métallique et/ou de la feuille de matière plastique et d'une couche de polyamide.

8. Tube à enveloppe protectrice selon l'une quelconque des revendications précédentes, **caractérisé en ce que** le polypropylène est un polypropylène isotactique des classes d'homopolymères de polypropylène, un cyclopolymère statistique de polypropylène ou un copolymère de polypropylène.

9. Tube à enveloppe protectrice selon l'une quelconque des revendications 1 à 8, **caractérisé en ce que** la feuille composite multicouche est enroulée en spirale et se chevauche sur les bords de butée s'étendant de manière longitudinale en spirale, ou est enroulée autour du tube central par butée.

10. Tube à enveloppe protectrice selon la revendication 9, **caractérisé en ce que** les bords de butée se chevauchant et s'étendant de manière longitudinale en spirale ou se trouvant en butée sont soudés ou collés ensemble.

11. Tube à enveloppe protectrice selon l'une quelconque des revendications 1 à 8, **caractérisé en ce que** la feuille composite multicouche est placée de manière longitudinale autour du tube central, les bords de butée s'étendant de manière longitudinale le long du tube central se chevauchant ou étant en butée.

12. Tube à enveloppe protectrice selon la revendication 11, **caractérisé en ce que** les bords de butée qui se chevauchent ou sont en butée sont soudés ou collés ensemble.

13. Tube à enveloppe protectrice selon l'une quelconque des revendications 1 à 8, **caractérisé en ce que** la feuille composite multicouche est placée de manière longitudinale autour du tube central, de telle manière que des bandes de feuilles libres dépassent au point de butée, dont les faces inférieures superposées forment une couture de feuilles, ou sont soudés ou collés ensemble et/ou que la couture de feuilles est pliée ou retournée une ou plusieurs fois pour former un joint à labyrinthe.
